# EUROPEAN PATENT SPECIFICATION

(11) **EP 3 270 013 B1**
(45) Date of publication and mention of the grant of the patent: **13.05.2020**
(21) Application number: 16761369.4
(22) Date of filing: 22.01.2016
(51) Int. Cl.: F16J 15/18, F16J 9/14, F16J 9/28, F16J 15/3208, F16J 15/3272

(54) **SEALING DEVICE**
DICHTUNGSVORRICHTUNG
DISPOSITIF D'ÉTANCHÉITÉ

(30) Priority: 09.03.2015 JP 2015045623
(43) Date of publication of application: 17.01.2018
(73) Proprietor: NOK Corporation, Minato-ku Tokyo 105-8585 (JP)
(72) Inventor: HINO Tomohiko, Kitaibaraki-shi Ibaraki 319-1535 (JP)
(74) Representative: TBK
(86) International application number: PCT/JP2016/051769
(87) International publication number: WO 2016/143397

(56) References cited:
- JP-A- 2001 208 207
- JP-A- 2006 038 063
- JP-A- 2007 255 652
- JP-A- 2007 255 652
- JP-A- 2009 058 003
- JP-A- 2014 077 547
- JP-U- S5 445 866
- JP-U- S60 175 850
- US-A- 1 563 566

## Description

### BACKGROUND OF THE INVENTION

### Field of the Invention

The present invention relates to a sealing device according to the preamble of claim 1 according to a sealing technique. The sealing device according to the present invention is used, for example, in a field of hydraulic and pneumatic devices which carry out reciprocating and oscillating motions, or used in the other fields.

### Description of the Conventional Art

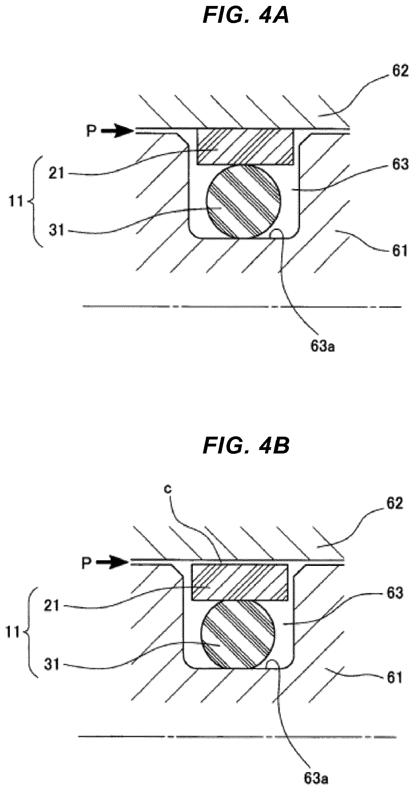

In recent years, a used condition of a sealing device installed to a seal portion in various devices tends to be severe in the context of improvement in device functions, and a rubber-only type seal (a rubber seal) constructed by a single part of a conventional rubber-like elastic body is hard to correspond to a seriously worn position. A sealing device having a combination seal 11 as shown in Fig. 4A has been employed in place of this.

More specifically, the sealing device in Fig. 4A is a sealing device that is installed to an installation groove 63 which is provided in one member (a shaft) 61 of two members (for example, a housing and the shaft inserted into a shaft hole of the housing) 61 and 62 which are relatively moved, thereby sealing between two members 61 and 62. The combination seal 11 is constructed by combining a first ring (a resin seal) 21 which comes into close contact with the other member (the housing) 62 of two members 61 and 62 and is made of a resin, and a second ring (a rubber seal) 31 which is interposed between the first ring 21 and a groove bottom portion 63a of the installation groove 63 and is made of a rubber-like elastic body.

The combination seal 11 is constructed by arranging in an outer peripheral side the first ring 21 which is excellent in a wear resistance and a low friction property and is made of a resin such as PTFE, and combining in an inner peripheral side the second ring 31 which is made of the rubber-like elastic body, for compensating a creep property (a setting easiness) of the first ring 21.

Patent Document 1 shows a generic sealing device according to the preamble of claim 1. Patent Document 2 shows a conventional sealing ring.

### PRIOR ART DOCUMENT

### Patent Document

Patent Document 1: JP 2009 058003 A Patent Document 2: JP 2007 255652 A

### SUMMARY OF THE INVENTION

### Problem to be Solved by the Invention

However, in the combination seal 11, an elastic force (an expansive force) of the second ring 31 is suppressed and the creep property of the first ring 21 may not be compensated in the case that a rigidity of the first ring 21 is high. As a result, a clearance c is generated at a creep position of the first ring 21 as shown in Fig. 4B, and a sealed fluid (pressure) P is likely to leak out of the clearance c.

The present invention is made by taking the above point into consideration, and an object of the present invention is to provide a sealing device having a combination seal constructed by combination of a first ring which is made of a resin and a second ring which is made of a rubber-like elastic body, wherein a sealing performance is hard to be lowered even if any creep is generated in the first ring, whereby an excellent sealing performance can be achieved.

### Means for Solving the Problem

The object is achieved by a sealing device having the features of claim 1.
In order to achieve the above object, a sealing device according to the present invention is a sealing device for sealing two members by installing a combination seal to an installation groove which is provided in one member of the two members moving relatively, the combination seal being constructed by combination of a first ring which comes into close contact with the other member of the two members and is made of a resin, and a second ring which is interposed between the first ring and a groove bottom portion of the installation groove and is made of a rubber-like elastic body, wherein the first ring is provided with a cut portion at one position circumferentially, the cut portion is provided with a step-cut shape which forms a protrusion portion by protruding a part of a cut surface of the first ring more than the other portions in a circumferential direction, and is provided with a bias-cut shape which forms a slope portion by diagonally cutting a leading end of the protrusion portion, and a length of the slope portion in the circumferential direction is set to be half or less than a length of the protrusion portion in the circumferential direction.

### Effect of the Invention

In the present invention having the structure mentioned above, since the cut portion is provided at one position of the first ring circumferentially, a seal surface pressure is maintained even if any creep is generated in the first ring. As a result, a sealing performance can be secured. Further, the elastic body of the second ring is not pinched by the cut portion and any leakage route passing through in an axial direction is not generated by forming the cut portion of the first ring into the step cut, combining the bias cut with the step cut, and setting the length of the slope portion in the bias cut in the circumferential direction to be half of less than the length of the protrusion portion in the step cut in the circumferential direction. Therefore, the sealing performance can be also secured. As a result, as initially intended in the present invention, the sealing performance is hard to be lowered even if the creep is generated in the first ring in the sealing device having the combination seal which is constructed by the combination of the first ring made of the resin and the second ring made of the rubber-like elastic body. Accordingly, it is possible to provide the sealing device which can achieve the excellent sealing performance.

### BRIEF EXPLANATION OF THE DRAWINGS

Figs. 1A and 1B are views showing a sealing device according to an embodiment of the present invention, in which Fig. 1A is a cross sectional view of a substantial part thereof, and Fig. 1B is a perspective view of a cross section of the substantial part thereof;
Figs. 2A, 2B and 2C are views showing a first ring which is provided in the sealing device, in which Fig. 2A is a view showing a part of an outer diameter surface thereof, Fig. 2B is a view showing a part of a side surface thereof, and Fig. 2C is a view showing a part of an inner diameter surface thereof;
Figs. 3A, 3B and 3C are views showing a cut portion which is provided in the first ring, in which Figs. 3A and 3C are perspective views respectively showing states when the cut portion is confronted, and Fig. 3B is a perspective view showing a state when the cut portion is detached;
Figs. 4A and 4B are views showing a sealing device according to a conventional example, wherein Fig. 4A is a cross sectional view of a substantial part thereof, and Fig. 4B is a cross sectional view of the substantial part and shows a state when a trouble is generated therein;
Figs. 5A, 5B and 5C are explanatory views of a cut portion which is provided in the sealing device according to the conventional example;
Figs. 6A and 6B are explanatory views of a cut portion which is provided in the sealing device according to the conventional example; and
Figs. 7A, 7B and 7C are explanatory views of a cut portion which is provided in a sealing device according to a comparative example.

### DETAILED DESCRIPTION OF PREFERRED EMBODIMENT

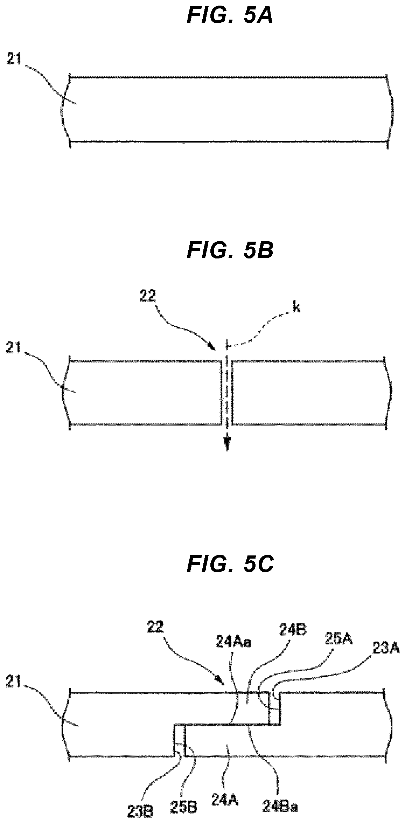

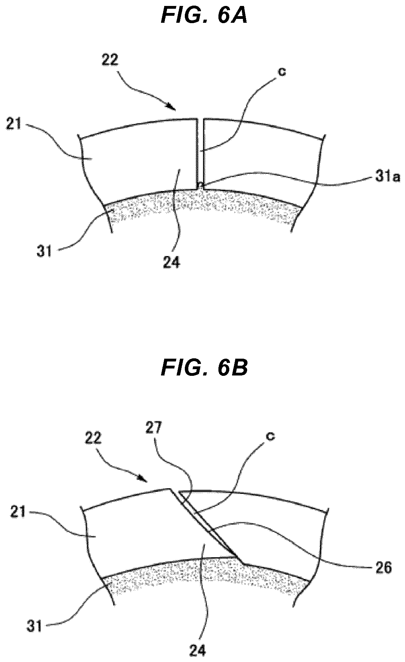

The present invention is invented on the basis of the following ideas.
(1) As mentioned above, in the sealing device having the combination seal 11 which is constructed by the combination of the first ring 21 made of the resin, and the second ring 31 made of the rubber-like elastic body, the clearance c may be generated in the seal surface under reduction of the seal surface pressure due to the creep property of the first ring 21, thereby causing the leakage.
(2) Consequently, in the present invention, first of all, the outer diameter of the first ring 21 is maintained by the expansive force of the second ring 31 even if the creep is generated on the outer peripheral surface of the first ring 21, since the cut portion is provided circumferentially at one position of the first ring 21. As a result, any clearance is not generated in the contact portion with the other member 62. Accordingly, it is possible to maintain the sealing performance.
(3) In addition, it is possible to prevent the leakage route passing through in the axial direction from being generated in the cut portion since the cut portion of the first ring 21 is formed as the step cut.
   More specifically, as shown from Fig. 5A to Fig. 5B, in the case that the cut portion 22 provided in the first ring 21 is a straight cut, a leakage route k passing through in an axial direction is generated here. Therefore, the cut portion 22 is formed as the step cut as shown in Fig. 5C in order to prevent the leakage route k, and the leakage route passing through in the axial direction is prevented from being generated in the cut portion 22.
   The step cut is structured such that protrusion portions 24A and 24B are formed by protruding parts of cut surfaces 23A and 23B in a circumferential direction in comparison with the other portion respectively in a pair of cut surfaces 23A and 23B which construct both ends of the cut portion 22, and the protrusion portions 24A and 24B are combined with concave portions 25A and 25B which are provided in correspondence to cut surfaces in an opposite side. Since the protrusion portion 24A provided in one cut surface 23A and the protrusion portion 24B provided in the other cut surface 23B are in contact with each other at respective facing surfaces (axial end surfaces) 24Aa and 24Ba, any leakage route passing through in the axial direction is not generated.
(4) Further, since the bias cut is combined with the step cut, it is possible to prevent an elastic body of the second ring 31 from entering into the cut portion 22 of the first ring 21 and being pinched by the cut portion 22, thereby preventing a factor of a rubber cut and a crack generation and preventing the leakage.
   More specifically, in the case that the leading end of the protrusion portion 24 of the step cut is not cut diagonally but is a surface orientated to be orthogonal to the circumferential direction as shown in Fig. 6A, the elastic body of the second ring 31 enters therein and is pinched (the pinched portion is denoted by reference symbol 31a), whereby the rubber cut and the crack generation may be caused and the leakage may be generated. Therefore, in order to prevent this, the leading end of the protrusion portion 24 of the step cut is formed as the bias cut which is cut diagonally as shown in Fig. 6B, thereby preventing the elastic body of the second ring 31 from entering into the cut portion 22 and being pinched. In the case that the leading end of the protrusion portion 24 is formed as the bias cut, the rigidity in the leading end of the protrusion portion 24 is lowered, and the leading end of the protrusion portion 24 can collapse as shown in Fig. 6B. Therefore, the clearance c is occluded and it is possible to prevent the elastic body of the second ring 31 from entering and being pinched. The phenomenon that the elastic body of the second ring 31 enters into the cut portion 22 of the first ring 21 and is pinched may be expressed as generation of "gnawing".
   The bias cut is structured such that the slope portion 26 is formed by diagonally cutting the leading end of the protrusion portion 24 and the slope portion 26 is combined with the corresponding slope portion 27 which is provided in correspondence to the cut surface in the opposite side. As a result, the leading end of the protrusion portion 24 is formed into a tapered shape, and the rigidity in the leading end of the protrusion portion 24 is lowered.
(5) Further, it is possible to prevent the leakage route passing through in the axial direction from being generated in the cut portion 22, by setting the length of the slope portion 26 in the bias cut in the circumferential direction to be half or less than the length of the protrusion portion 24 in the step cut in the circumferential direction.

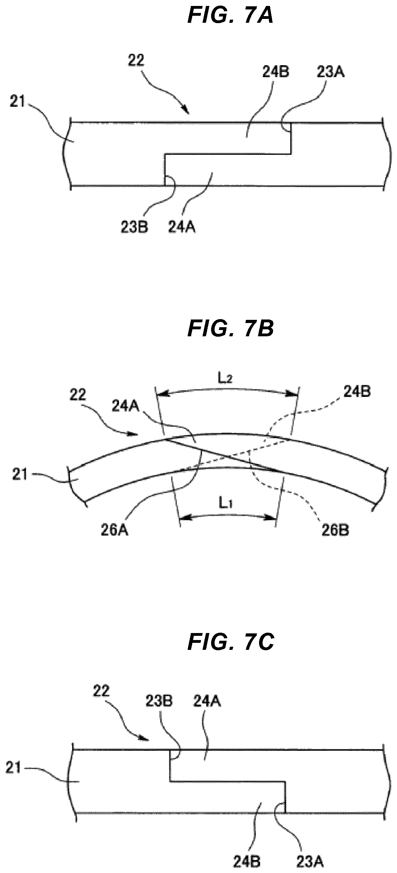

More specifically, as shown in Figs. 7A, 7B and 7C, a slope portion 26A is provided in a leading end of protrusion portion 24A in one cut surface 23A of a pair of cut surfaces 23A and 23B constructing the cut portion 22, and a slope portion 26B is provided in a leading end of the protrusion portion 24B in the other cut surface 23B, in a shape in which the bias cut is combined with the step cut in the above item (4). In the case that the slope portion 26A and the slope portion 26B are formed into a shape that the slope portions intersect each other as seen from one side in the axial direction, there is fear that a leakage route passing through in an axial direction is generated in such a manner as to be connected from the one slope portion 26A to the other slope portion 26B via the intersection portion. The slope portions 26A and 26B intersect each other because the length L1 of the slope portions 26A and 26B in the circumferential direction is greater than the half of the length L2 of the protrusion portions 24A and 24B in the circumferential direction.

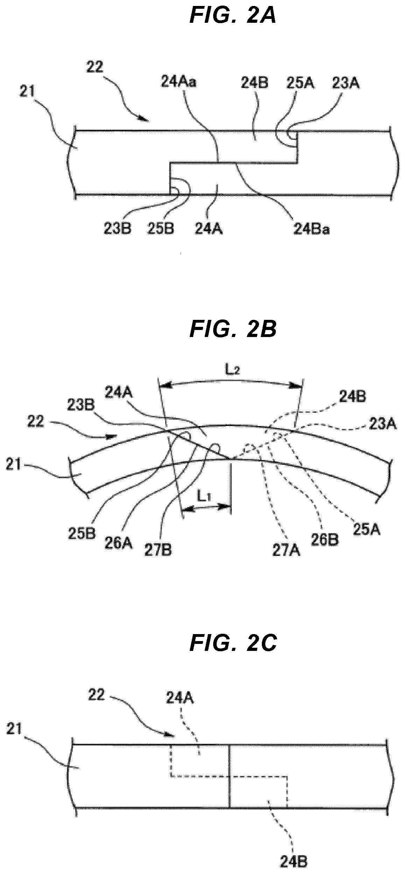

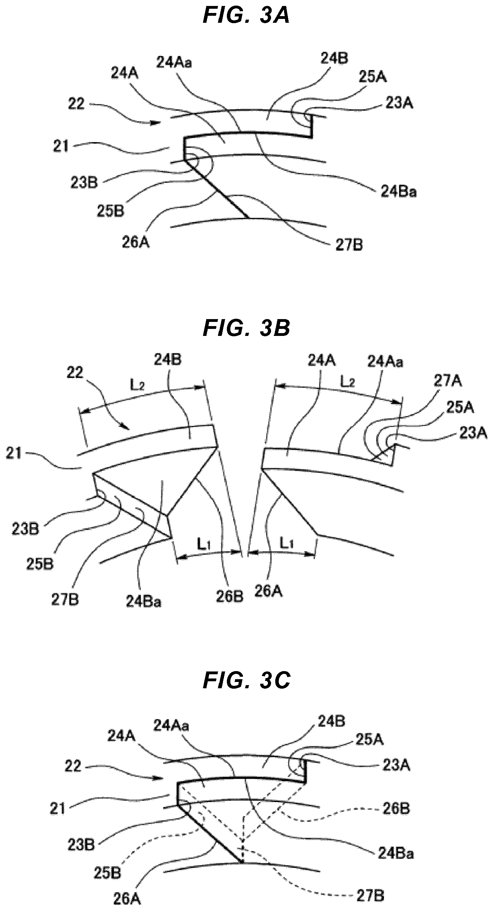

In the present invention, the length L1 of the slope portions 26A and 26B in the circumferential direction is set to be half or less than the length L2 of the protrusion portions 24A and 24B in the circumferential direction as shown in Figs. 2A, 2B and 2C or Figs. 3A, 3B and 3C, thereby forming the slope portion 26A provided in the leading end of the protrusion portion 24A of the one cut surface 23A in a pair of cut surfaces 23A and 23B constructing the cut portion 22, and the slope portion 26B provided in the leading end of the protrusion portion 24B in the other cut surface 23B so that the slope portion 26A and the slope portion 26B do not intersect each other as seen from one side in the axial direction. In the not-intersecting shape, since the protrusion portions 24A and 24B are in contact with each other only at the mutually facing surfaces 24Aa and 24Ba, the leakage route is blocked. Therefore, the leakage route passing through in the axial direction is not generated.

### Embodiment

Next, a description will be given of an embodiment according to the present invention with reference to the accompanying drawings.

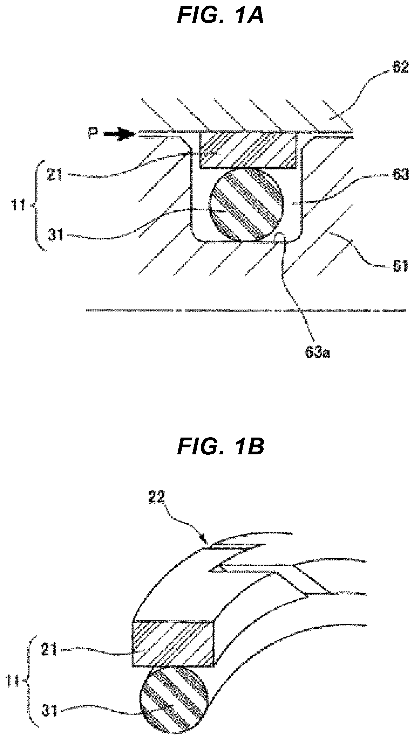

As shown in Figs. 1A and 1B, a sealing device according to the embodiment is a sealing device for sealing between relatively moving two members (for example, a housing and a shaft inserted into a shaft hole of the housing) 61 and 62 by being installed to an installation groove 63 which is provided in one member (the shaft, which is also called as a shaft hereinafter) 61 of the two members 61 and 62, is provided with a combination seal 11, and is structured such that the combination seal 11 is constructed by a combination of a first ring (a resin seal) 21 which comes into close contact with the other member (the housing, which is also called as a housing hereinafter) of the two members 61 and 62 and is made of a resin, and a second ring (a rubber seal) 31 which is interposed between the first ring 21 and a groove bottom portion 63a of the installation groove 63 and is made of a rubber-like elastic body.

A material of the first ring 21 is specifically PTFE, however, a hard resin such as nylon can be applied in addition. All of rubber-like elastic bodies such as NBR, FKM and EPDM can be applied to a material of the second ring 31.

The first ring 21 is provided at one position circumferentially a cut portion 22 having a shape obtained by cutting a ring.

The cut portion 22 is provided with a step-cut shape as shown in Fig. 2A, and is also provided with a bias-cut shape as shown in Fig. 2B.

The step cut is structured such that protrusion portions 24A and 24B are formed by making parts of cut surfaces 23A and 23B (one section in a state in which the cut surfaces 23A and 23B are separated into two sections in an axial direction, that is, one half area in the axial direction) of the cut surfaces 23A and 23B protrude in a circumferential direction in comparison with the other portions in a pair of cut surfaces 23A and 23B which construct both ends of the cut portion 22, and the protrusion portions 24A and 24B are combined with concave portions 25A and 25B which are provided in correspondence to cut surfaces in an opposite side. The protrusion portion 24A provided in one cut surface 23A is in contact with the protrusion portion 24B provided in the other cut surface 23B at mutual facing surfaces (axial end surfaces) 24Aa and 24Ba. Therefore, the step cut is structured such that any leakage route passing through in an axial direction is not generated.

The bias cut is structured such that slope portions 26A and 26B are formed by diagonally cutting leading ends of the protrusion portions 24A and 24B, and the slope portions 26A and 26B are combined with corresponding slope portions 27A and 27B which are provided in correspondence to cut surfaces in an opposite side. As a result, the leading ends of the protrusion portions 24A and 24B are formed into a tapered shape. Therefore, a rigidity in the leading ends of the protrusion portions 24A and 24B is lowered, and the bias cut is structured such that the gnawing phenomenon is not generated. A diagonal direction is a direction in which a protruding amount of the protrusion portions 24A and 24B in a circumferential direction is reduced little by little from an outer diameter side to an inner diameter side. An angle between 20 degrees and 50 degrees is preferable for a cut angle.

Further, as shown in Figs. 2A, 2B and 2C or Figs. 3A, 3B and 3C, a circumferential length (a maximum length) L1 of the slope portions 26A and 26B is set to be half or less than a circumferential length (a maximum length) L2 of the protrusion portions 24A and 24B. As a result, as shown in Fig. 2B or Fig. 3C, the slope portion 26A and the slope portion 26B do not intersect each other as seen from one side in the axial direction, the slope portion 26A being provided in the leading end of the protrusion portion 24A in one cut surface 23A of a pair of cut surfaces 23A and 23B constructing the cut portion 22, the slope portion 26B being provided in the leading end of the protrusion portion 24B in the other cut surface 23B. In the not-intersecting shape as mentioned above, since the protrusion portions 24A and 24B are in contact with each other only at the mutual facing surfaces 24Aa and 24Ba, the leakage route passing through in the axial direction is not generated.

In the sealing device having the structure mentioned above, since the cut portion 22 is provided circumferentially at one position of the first ring 21, the seal surface pressure is maintained even if any creep is generated in the first ring 21. As a result, it is possible to secure the sealing performance. Further, the cut portion 22 of the first ring 21 is formed as the step cut, the bias cut is combined with the leading end portion of the step cut, and the circumferential length L1 of the slope portions 26A and 26B in the bias cut is set to be half of less than the circumferential length L2 of the protrusion portions 24A and 24B in the step cut. Therefore, the gnawing phenomenon is not generated, and the leakage route passing through in the axial direction is not generated. Accordingly, it is possible to secure the sealing performance on the basis of these matters. As a result, it is possible to provide the sealing device in which the sealing performance is hard to be lowered even if any creep is generated in the first ring 21 and an excellent sealing performance can be achieved, in the sealing device having the combination seal 11 which is constructed by the combination of the first ring 21 made of the resin and the second ring 31 made of the rubber-like elastic body.

### Description of Reference Numerals

11 combination seal
21 first ring
22 cut portion
23A, 23B cut surface
24A, 24B protrusion portion
24Aa, 24Ba facing surface
25A, 25B concave portion
26A, 26B slope portion
27A, 27B corresponding slope portion
61 one member (shaft)
62 other member (housing)
63 installation groove
63a groove bottom portion
c clearance
P sealed fluid
k leakage route

## Claims

1. A sealing device for sealing two members (61, 62) by installing a combination seal (11) to an installation groove (63) which is provided in one member of the two members (61, 62) moving relatively, the sealing device comprising:
the combination seal (11) being constructed by combination of a first ring (21) which, in use, comes into close contact with the other member of the two members (61, 62) and is made of a resin, and a second ring (31) which, in use, is interposed between the first ring (21) and a groove bottom portion (63a) of the installation groove (63) and is made of a rubber-like elastic body;
the first ring (21) having a cut portion (22) at one position circumferentially;
the cut portion (22) having a step-cut shape which forms a protrusion portion (24A, 24B) by protruding a part of a cut surface (23A, 23B) of the first ring (21) more than the other portions in a circumferential direction, **characterized in that**
the cut portion (22) has a bias-cut shape which forms a slope portion (26A, 26B) by diagonally cutting a leading end of the protrusion portion (24A, 24B); and **in that**
a length (L1) of the slope portion (26A, 26B) in the circumferential direction is set to be half or less than a length (L2) of the protrusion portion (24A, 24B) in the circumferential direction.

## Patentansprüche

1. Dichtungsvorrichtung zum Abdichten zweier Elemente (61, 62), indem eine Kombinationsdichtung (11) an einer Installationsnut (63) installiert wird, die in einem Element der zwei Elemente (61, 62) vorgesehen ist, die sich relativ bewegen, wobei die Dichtungsvorrichtung Folgendes aufweist:
die Kombinationsdichtung (11), die durch eine Kombination eines ersten Rings (21), der, bei Verwendung, in engem Kontakt mit dem anderen Element der zwei Elemente (61, 62) gelangt und aus einem Harz gefertigt ist, und eines zweiten Rings (31) aufgebaut ist, der, bei Verwendung, zwischen dem ersten Ring (21) und einem Nutbodenabschnitt (63a) der Installationsnut (63) angeordnet ist und aus einem gummiartigen elastischen Körper gefertigt ist;
wobei der erste Ring (21) einen gekappten Abschnitt (22) an einer Umfangsposition hat;
der gekappte Abschnitt (22) eine Stufen-kapp-Form hat, die einen Vorsprungsabschnitt (24A, 24B) ausbildet, indem ein Teil einer gekappten Fläche (23A, 23B) des ersten Rings (21) weiter als die anderen Abschnitte in einer Umfangsrichtung vorsteht, **dadurch gekennzeichnet, dass**
der gekappte Abschnitt (22) eine Neigungs-kapp-Form hat, die einen Flankenabschnitt (26A, 26B) ausbildet, indem ein vorderes Ende des Vorsprungsabschnitts (24A, 24B) diagonal gekappt wird; und dass
eine Länge (L1) des Flankenabschnitts (26A, 26B) in der Umfangsrichtung festgelegt ist, um halb oder weniger zu sein als eine Länge (L2) des Vorsprungsabschnitts (24A, 24B) in der Umfangsrichtung.

## Revendications

1. Dispositif d'étanchéité pour rendre étanche deux éléments (61, 62) par l'installation d'un joint d'étanchéité combiné (11) dans une rainure d'installation (63) qui est ménagée dans un élément parmi les deux éléments (61, 62) se déplaçant de manière relative, le dispositif d'étanchéité comprenant :
le joint d'étanchéité combiné (11) étant construit par la combinaison d'une première bague (21) qui, en cours utilisation, vient en contact intime avec l'autre élément parmi les deux éléments (61, 62) et est constituée d'une résine, et d'une seconde bague (31) qui, en cours d'utilisation, est interposée entre la première bague (21) et une partie de fond de rainure (63a) de la rainure d'installation (63) et est constituée d'un corps élastique de type caoutchouc ;
la première bague (21) ayant une partie découpée (22) à une position, de manière circonférentielle ;
la partie découpée (22) ayant une forme de découpe en gradin qui forme une partie en saillie (24A, 24B) par une partie d'une surface découpée (23A, 23B) de la première bague (21) faisant davantage saillie que les autres parties dans une direction circonférentielle, **caractérisé en ce que**
la partie découpée (22) possède une forme découpée de biais qui forme une partie en pente (26A, 26B) par la découpe en diagonale d'une extrémité avant de la partie en saillie (24A, 24B) ; et **en ce que**
une longueur (L1) de la partie en pente (26A, 26B) dans la direction circonférentielle est définie pour être la moitié ou moins qu'une longueur (L2) de la partie en saillie (24A, 24B) dans la direction circonférentielle.
